# EUROPEAN PATENT SPECIFICATION

(11) **EP 1 871 690 B1**
(45) Date of publication and mention of the grant of the patent: **09.07.2014**
(21) Application number: 06790506.7
(22) Date of filing: 13.04.2006
(51) Int. Cl.: B65D 85/04

(54) **STRIP PACKAGING MATERIAL**
STREIFENVERPACKUNGSMATERIAL
RUBAN DE MATERIAU D'EMBALLAGE

(30) Priority: 14.04.2005 US 671311 P
(43) Date of publication of application: 02.01.2008
(73) Proprietor: IBCO SRL, Brittons Hill 14027 Saint Michael (BB)
(72) Inventor: VIDO, Martin, Mission, British Columbia V2V 7C3 (CA); WILLIAMS, Timothy, A., South Elgin, Illinois 60177 (US); SETH, Manish, K., Mission, British Columbia V2V 7B6 (CA)
(74) Representative: Tansini, Elio Fabrizio
(86) International application number: PCT/CA2006/000541
(87) International publication number: WO 2006/136002

(56) References cited:
- EP-A2- 1 442 874
- CA-A1- 2 326 257
- CA-A1- 2 352 518
- CA-A1- 2 390 278
- US-A1- 2003 211 270

## Description

### Field of the Invention

The invention pertains to packaging materials for the protection of articles such as steel coils.

### Background of the Invention

Products that are prone to corrosion or damage, such as steel coils, are wrapped to protect them from scratching, abrasion, mechanical damage and moisture penetration during shipping and storage. The packaging material used for this purpose is typically a flexible sheet material in strip form that is wound around the product in an overlapping manner. Such strip products are commonly applied by automated packaging machines, though they can also be applied manually.

In the prior art, the use of such strip packaging material also requires the use of an outer wrap, commonly a stretch wrap plastic, which is applied over the wound strip material to bond and hold its strips together. Without this outer wrap, the windings of the strip material would be prone to slippage, leaving gaps between the strips that would allow moisture and air to corrode the unprotected surfaces and make the wrapped product susceptible to handling damage. The outer layer helps to prevent this, but involves an additional packaging step and higher material cost.

Examples of packaging materials disclosed in the patent literature include the following. EP 1 442 874 A2 discloses a cling film system for wrapping steel coils, the system having first and second film plies having different compositions. CA 2 352 518 A1 discloses a composite sheet wrapping material comprising a non-woven fabric layer laminated to a water-impermeable layer. CA 2 390 278 A1 discloses a multi-layered packaging sheet for wrapping metal goods, comprising a middle woven layer, an inner polyolefin film layer with corrosion inhibitor, and a water-resistant outer layer. CA 2 326 257 A1 discloses a sheet material for wrapping metal goods, comprising a middle scrim layer, an outer impermeable layer of polyolefin, and an inner polymer resin coating layer. US 2003/211270 A1 discloses a pressure-sensitive food grade wrap film comprising a substrate overcoated with a pressure-sensitive adhesive, a release overprinted on the adhesive, and a release coating on the opposite side of the substrate.

### Summary of Invention

The invention is a packaging material, suitable for application to a coil of steel or other object, comprising a strip material that bonds or adheres to itself, thus avoiding slippage of the windings of the strip material and eliminating the need for an outer wrapper as used in the prior art.

According to one embodiment of the invention, there is provided a strip of packaging material for wrapping an object, the strip being water impermeable and having an upper surface, a lower surface and two longitudinal edges, wherein said lower surface is adapted to releasably bond to said upper surface when the strip is applied to said object in overlapping manner such that a portion of the lower surface is in contact with the upper surface and the lower surface is towards said object.

According to a further embodiment of the invention, there is provided a strip of packaging material for wrapping an object, the strip being water impermeable and having an upper surface, a lower surface and first and second longitudinal edges, the strip comprising a first bonding band on the upper surface adjacent to the first longitudinal edge and a second bonding band on the lower surface adjacent to the second longitudinal edge, the first and second bands being adapted to releasably bond to each other when the strip is applied to the object in overlapping manner such that the first and second bands are in contact with each other and the lower surface is towards the object.

According to a further embodiment of the invention, there is provided a strip of packaging material for wrapping an object, the strip being water impermeable and having an upper surface, a lower surface and two longitudinal edges, the strip comprising a bonding band on the upper surface adjacent to one the longitudinal edge, the band being adapted to releasably bond to the lower surface when the strip is applied to the object in overlapping manner such that the band is in contact with the lower surface and the lower surface is towards the object.

According to further embodiments of the invention, there are provided methods for wrapping an object using a strip of the packaging material of the invention, comprising the step of applying the strip to the object in an overlapping manner such that a portion of the lower surface of the strip is in contact with the upper surface and the lower surface is towards the object.

### Brief Description of the Drawings

Fig. 1(a) is a cross-sectional view across the width of a strip of packaging material according to a first embodiment of the invention.
Fig. 1(b) shows an alternative configuration of the embodiment of Fig. 1(a).
Fig. 1(c) shows a second alternative configuration of the embodiment of Fig. 1(a).
Fig. 1(d) shows a third alternative configuration of the embodiment of Fig 1(a).
Fig. 1(e) shows a fourth alternative configuration of the embodiment of Fig. 1(a).
Fig. 2(a) is a cross-sectional view across the width of a strip of packaging material according to a second embodiment of the invention.
Fig. 2(b) is an alternative configuration of the embodiment of Fig. 2(a).
Fig. 3(a) is a cross-sectional view across the width of a strip of packaging material according to a third embodiment of the invention.
Fig 3(b) is an alternative configuration of the embodiment of Fig. 3(a).

### Detailed Description of the Preferred Embodiments

Corresponding and like parts are referred to in the following description and indicated in the drawings by the same reference characters.

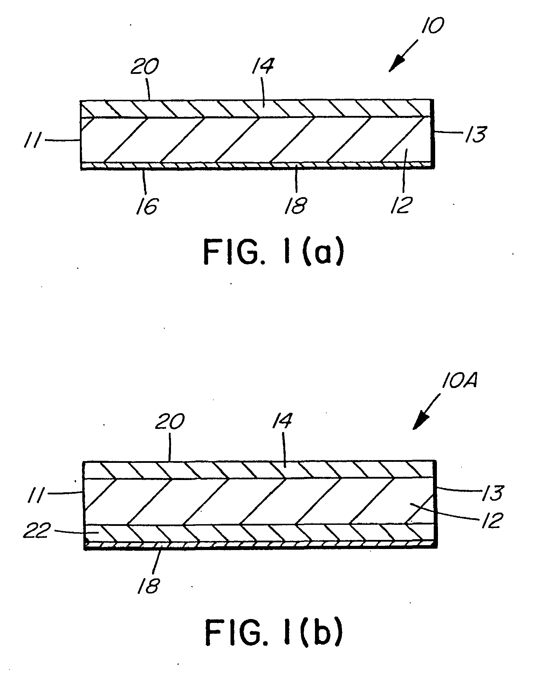

According to a first embodiment of the invention, shown in Fig. 1(a), the wrapping strip material **10** comprises a lower woven layer **12** (i.e. a scrim) laminated to an upper, non-woven layer **14.** The strip has opposed longitudinal edges **11, 13.** A bonding coating **18,** which may be an adhesive or cohesive or polymeric tackifier coating, is applied to the entire lower (bottom) surface **16** of the woven layer. The coating of layer **18** is selected to have a degree of adhesiveness that provides a suitable degree of adhesion with upper (top) surface **20.** The bonding coating **18** is capable of adhering to the surface **20** of the strip material **10,** when the strip is applied in an overlapping or partially overlapping manner in packaging a steel coil or other product, but at the same time the coating **18** does not leave any adhesive residue on the product. In use, coating **18** is in contact with the object to be wrapped.

In some cases, the top surface **20** of the strip **10** will preferably be treated by means of a corona treatment. For example, the cohesion between the coating **18** and the surface **20** can be improved by applying a low tack adhesive to the surface **20.** In such case, the surface **20** will be corona treated. Second, where the tack level of the adhesive of the coating **18** is too high, it will stick too firmly to layer **14,** preventing easy unwinding of the roll of strip. A release coating material, such as varnish, is then applied to surface **20** to reduce the degree of cohesion to the coating **18.** In such case, upper surface **20** will be corona treated. Third, if it is desired to be able to print on upper surface **20,** corona treatment is used to achieve proper ink adhesion.

The bottom surface **16** of the woven layer **12** may also be treated in a suitable manner, e.g. by a corona treatment, to promote the bonding between the bonding coating **18** and the surface **16** of the strip.

The bonding coating **18** is preferably tacky in feel, such that it adheres to the top surface **20** of the strip **10** when wound in an overlapping manner, sufficiently to resist lateral forces on and sliding movement of the strip, but the coating readily releases when the strip **10** is unwound to un-wrap the product. Optionally, the bonding coating **18** may also have the characteristic of removably adhering to the metal coil or other wrapped product.

The strip **10** may incorporate corrosion inhibitors, such as volatile corrosion inhibitors. Such corrosion inhibitors may be present in the bonding coating **18** or in the woven layer **12.**

The woven layer **12** is preferably formed of tapes of polyolefin material, such as polyethylene or polypropylene, or fiberglass or polyester strand fibers. The woven layer **12** may also be formed of partially or fully stretchable elastic tapes. The non-woven layer **14** is preferably a film of polyolefin material. Its purpose is principally to maintain the integrity of the woven layer and impart a waterproof outer coating to the wrapping material. The non-woven layer can be bonded to the woven layer by any conventional method, for example by lamination, heat sealing, adhesives, or by direct extrusion onto the woven layer.

Optionally, the wrapping material **10** may include one or more additional layers, such as a layer of kraft paper or a second layer of synthetic polymeric material or non-woven material (Spunbond Polypropylene PP). Fig. 1(b) illustrates a wrapping material **10A,** an alternative embodiment of the wrapping material of Fig. 1(a), which incorporates one such additional polyolefin layer **22.**

The strip material **10** may be wound into a roll for use, the roll diameter being preferably in the range of about 9.5 and 11 inches. The width of the strip is preferably in the range of 3 to 24 inches, more preferably 7 to 12 inches. It is a thin, flexible material (in the drawings, the thickness is exaggerated for clarity of illustration).

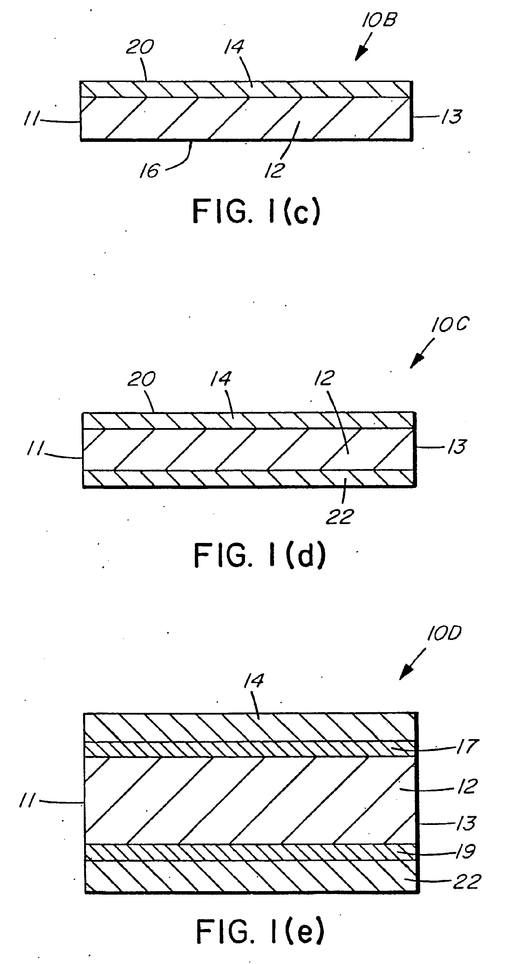

Referring next to Fig. 1(c), a further alternative configuration of material **10** is strip material **10B** in which layer **14** may be made out of a polyolefin (such as LDPE or LLDPE) and/or an elastomer that may be stretchable and that may include a tackifier. In this configuration, woven layer **12** may also include tapes that are partially or fully stretchable or elastic; these tapes may include a vapor corrosion inhibitor.

Fig. 1(d) shows a further configuration of the strip material, 10C, in which either polyolefin layer **22** or non-woven layer **14** or both layers may be a polyolefin (such as LDPE or LLDPE) layer that may be stretchable and that includes a tackifier. The non-woven stretchable layers **14** and **22** in Figs. 1(c) and (d) can be bonded to the woven layer by any conventional method, for example by lamination, heat sealing, adhesives, or by direct extrusion onto the woven layer.

In the embodiments of Figs. 1(c) and 1(d), the polyolefin layers **22** and **14** have the property to adhere to the top surface **20** of the strip when wound in an overlapping manner, sufficiently to resist lateral forces on a sliding movement of the strip, but they are readily removed when the strip is unwound to un-wrap the product. Optionally, the tacky layer **22** may also have the characteristics of removably adhering to the metal coil or other wrapped product. The tacky layer **22** may also include a volatile corrosion inhibitor.

Also on materials **10B** or **10C** layers **14** and **22** have the additional function of sealing the overlap of strip layers during material application.

Figure 1(e) shows a further configuration of the strip, in which strip material **10D** includes layers **14** and **22** bonded to woven layer **12** by bonding layers **17** and **19** respectively. The bonding agent of layers **17, 19** has a different elongation rate than layers **14** and **22.** Layers **14** and **22** are more stretchable than layers **17** and **19.** This difference allows layers **14** and **22** to move independently from each other and from layer **12** during the packaging application, enhancing the packaging sealability and ability to protect the wrapped material. This independent movement of the layers may be achieved by either fracturing of the bonding agent or its complete separation from layers **12,14** and **22.** The bonding agent may be a polyolefin layer acting as a laminating agent.

Though it is preferably multilayered, and described as being multilayered, it will be understood that the strip packaging material of the invention can comprise a single layer, so long as the single layer has the required properties of mechanical strength and impermeability.

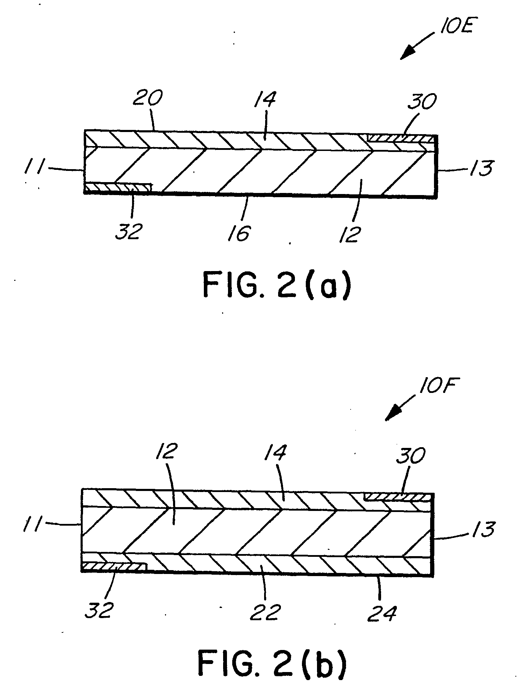

According to a second general embodiment of the invention, shown in Fig. 2(a) and (b), the wrapping strip material has bonding bands rather than having a bottom coating on the entire bottom surface of the stip. The strip **10E,** shown in Fig. 2(a), comprises a non-woven layer **14** and a woven layer **12** as described above in respect of the packaging strip **10.** A band **30** comprising a bonding coating extends along one longitudinal edge **13** on the upper surface **20** of the strip and a second bonding coating band **32** extends along the other longitudinal edge **11** on the lower surface **16** of the strip. The bands **30, 32** are preferably about two to three inches wide for a strip that is about 10 inches wide. The coating material comprising bands **30, 32** preferably comprises an adhesive, cohesive or polymeric tackifier coating, i.e. a material that adheres only to itself.

The strip **10F,** shown in Fig. 2(b) is essentially the same as that of Fig. 2(a), except that it includes a second non-woven layer **22** as the bottom layer, bonded to the woven layer **12.** The layer **22** may be a layer of synthetic polymeric material or kraft paper, as described above. When the strip material **10E, 10F** is used to wrap a product, it is applied in an overlapping manner such that longitudinal edge **13** is the leading edge and band **30** is overlapped by band **32** of the next winding of the strip, so that a bond is formed between the two bands **30, 32.**

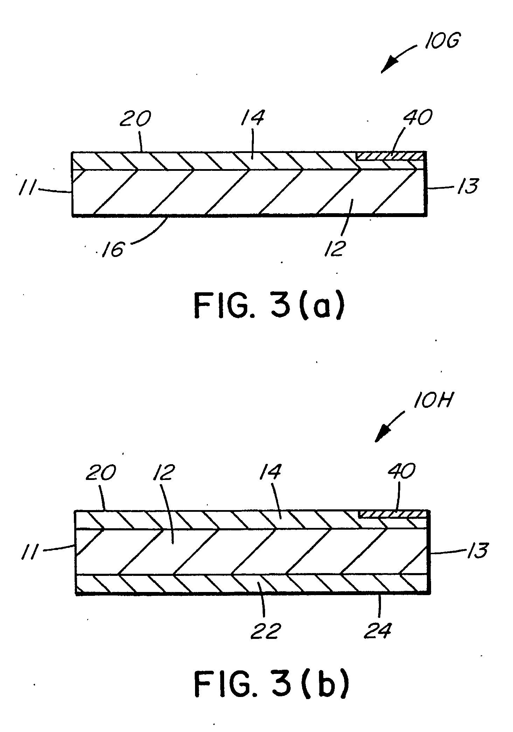

According to a third general embodiment of the invention, shown in Figs. 3(a) and 3(b), the wrapping strip materials **10G** and **10H** are essentially the same as described above for strip material **10E** and **10F** respectively, except that, instead of a top and a bottom bonding band **30, 32,** there is provided a single bonding band **40** along one longitudinal edge **13** on the upper surface **20** of the strip. The bottom surface of the strip is treated, e.g. by a corona treatment, in order to provide for adequate bonding between the band **40** and the bottom surface.

Longitudinal edge **13** is intended to be the leading edge as strips **10G** and **10H** are applied to a metal coil or other object. The strip is applied in an overlapping manner such that a portion of bottom surface **16** (Fig. 3(a)) or **24** (Fig. 3(b)) of a successive winding of the strip overlaps band **40,** forming a bond. Band **40** may have adhesive properties the same as those described above with respect to the coating **18** of packaging strip **10.**

If the tack level of the coating **18** is too high, blocking of the roll of strip **10G, 10H** is caused during unwinding. To avoid this, a release coating material such as varnish can be applied to the bottom surface of the strip.

The wrapping strip materials of the invention can be applied manually, but they are preferably applied automatically by a machine whereby the strip of packaging material passes through the eye of the coil (i.e. the opening inside the donut-shaped coil), circles around the outer side of the coil and passes through again, and repeats this motion. As the packaging material is circling through and outside of the coil, the coil itself is slowly turned about its axis, allowing for the circular motion of the packaging material to cause an overlap on itself and eventually cover the entire exposed surfaces of the coil.

As will be apparent to those skilled in the art in the light of the foregoing disclosure, many alterations and modifications are possible in the practice of this invention without departing from the scope thereof, which is defined by the following claims.

## Claims

1. A strip of packaging material (**10G**, **10H**) for wrapping an object, said strip being water impermeable and having an upper surface (**20**), a lower surface (**16, 24**) and two longitudinal edges (**11**, **13**), said strip comprising a bonding band (**40**) on said upper surface adjacent to one said longitudinal edge (**13**), said band being adapted to releasably bond to **all parts of** said lower surface when said strip is applied to said object in overlapping manner such that said band is in contact with said lower surface and said lower surface is towards said object.

2. A strip of packaging material according to claim **1**, wherein said strip comprises a woven layer (**12**) and a non-woven layer (**14**) bonded together.

3. A strip of packaging material according to claim **2**, wherein said layers are bonded together by means of lamination, heat- sealing, adhesives, or extrusion of said non-woven layer onto said woven layer.

4. A strip of packaging material according to claim **2,** wherein said lower surface **(24)** comprises a bonding coating **(22)** applied to said woven layer **(12).**

5. A strip of packaging material according to **claim 1,** wherein said upper surface **(20)** is corona treated.

6. A strip of packaging material according to claim **2,** wherein said woven layer **(12)** has a surface **(16)** that is corona treated.

7. A strip of packaging material according to claim **4,** wherein said woven layer **(12)** is treated to promote bonding to said bonding coating.

8. A strip of packaging material according to claim **4,** wherein said bonding coating **(22)** is adapted to removably adhere to said object.

9. A strip of packaging material according to any one of claims **1 - 8,** wherein said strip includes corrosion inhibitors.

10. A strip of packaging material according to claim **2,** wherein said woven layer **(12)** comprises tapes of polyolefin material, fiberglass or polyester.

11. A strip of packaging material according to claim **2,** wherein said woven layer **(12)** comprises stretchable elastic tapes.

12. A strip of packaging material according to claim **2,** wherein said non-woven layer **(14)** comprises a water impermeable film of polyolefin material.

13. A strip of packaging material according to claim **2,** further comprising a second non-woven layer **(22)** bonded to said woven layer.

14. A strip of packaging material according to claim **2**, wherein said non-woven layer (14) comprises a tackifier.

15. A strip of packaging material according to claim **13**, wherein said non-woven layers (14, 22) are bonded to said woven layer (12) by means of a bonding agent that permits movement of said non-woven layers relative to said woven layer.

16. A strip of packaging material according to claim **15**, wherein said bonding agent is a polyolefin layer **(17, 19)**.

17. A strip of packaging material according to claim **1**, wherein said band comprises an adhesive coating.

18. A strip of packaging material according to claim **1**, wherein said band comprises a cohesive or polymeric tackifier coating.

## Patentansprüche

1. Streifen aus Verpackungsmaterial (10G, 10H) zum Einwickeln eines Gegenstandes, wobei der Streifen wasserundurchlässig ist und eine obere Fläche (20), eine untere Fläche (16, 24) sowie zwei Längskanten (11, 13) hat, wobei der Streifen ein erstes Verbindungsband (40) auf der oberen Fläche angrenzend an einem der Längskanten (13) umfasst, wobei das Verbindungsband dazu angepasst ist, zuverlässig mit allen Teilen der unteren Fläche verbunden zu werden, wenn das Band überlappend auf den Gegenstand derart aufgebracht wird, dass das Band in Berührung mit der unteren Fläche und die untere Fläche auf den Gegenstand gerichtet ist.

2. Streifen aus Verpackungsmaterial nach Anspruch 1, wobei der Streifen eine gewobene (12) Schicht und eine Vliesschicht (14) umfasst, die miteinander verbunden sind.

3. Streifen aus Verpackungsmaterial nach Anspruch 2, wobei die Schichten durch Laminieren, Heißsiegeln, Klebstoffe, oder Extrusion der Vliesschicht auf die gewobene Schicht miteinander verbunden sind.

4. Streifen aus Verpackungsmaterial nach Anspruch 2, wobei die untere Fläche (24) eine auf die gewobene Schicht (12) aufgebrachte bindende Beschichtung (22) umfasst.

5. Streifen aus Verpackungsmaterial nach Anspruch 1, wobei die obere Fläche (20) Corona-behandelt ist.

6. Streifen aus Verpackungsmaterial nach Anspruch 2, wobei die gewobene Schicht (12) eine Oberfläche (16) hat, die Corona-behandelt ist.

7. Streifen aus Verpackungsmaterial nach Anspruch 4, wobei die gewobene Schicht (12) eigens dazu behandelt ist, um die Bindung an die bindende Beschichtung zu unterstützen.

8. Streifen aus Verpackungsmaterial nach Anspruch 4, wobei die bindende Beschichtung (22) angepasst ist, um lösbar an den Gegenstand zu haften.

9. Streifen aus Verpackungsmaterial nach einem der Ansprüche 1-8, wobei der Streifen Korrosionshemmstoffe enthält.

10. Streifen aus Verpackungsmaterial nach Anspruch 2, wobei die gewebte Schicht (12) Bänder aus Polyolefinmaterial, Fiberglas, oder Polyester umfasst.

11. Streifen aus Verpackungsmaterial nach Anspruch 2, wobei die gewebte Schicht (12) dehnbare elastische Bänder umfasst.

12. Streifen aus Verpackungsmaterial nach Anspruch 2, wobei die Vliesschicht (14) eine wasserundurchlässige Folie aus Polyolefinmaterial umfasst.

13. Streifen aus Verpackungsmaterial nach Anspruch 2, ferner umfassend eine zweite Vliesschicht (22), die mit der gewobenen Schicht verbunden ist.

14. Streifen aus Verpackungsmaterial nach Anspruch 2, wobei die Vliesschicht (14) einen Klebrigmacher umfasst.

15. Streifen aus Verpackungsmaterial nach Anspruch 13, wobei die Vliesschichten (14, 22) mit der gewebten Schicht (12) mittels eines Haftvermittlers verbunden sind, der die Bewegung der Vliesschichten relativ zur gewobenen Schicht erlaubt.

16. Streifen aus Verpackungsmaterial nach Anspruch 15, wobei der Haftvermittler eine Polyolefin-Schicht (17, 19) ist.

17. Streifen aus Verpackungsmaterial nach Anspruch 1, wobei das Band eine Klebstffbeschichtung umfasst.

18. Streifen aus Verpackungsmaterial nach Anspruch 1, wobei das Band eine Kohäsions- oder polymere Klebrigmacherbeschichtung umfasst.

## Revendications

1. Ruban de matériau d'emballage (10G, 10H) servant à envelopper un objet, ledit ruban étant imperméable à l'eau et ayant une surface supérieure (20), une surface inférieure (16, 24) et deux bords longitudinaux (11, 13), ledit ruban comprenant une bande de collage (40) sur ladite surface supérieure adjacente à l'un desdits côtés longitudinaux (13), ladite bande étant adaptée pour adhérer de façon détachable à toutes les parties de ladite surface inférieure lorsque ledit ruban est appliqué au dit objet de façon chevauchante de sorte que ladite bande soit en contact avec ladite surface inférieure et que ladite surface inférieure soit orientée vers ledit objet.

2. Ruban de matériau d'emballage selon la revendication 1, dans lequel ledit ruban comprend une couche tissée (12) et une couche non tissée (14) collées ensemble.

3. Ruban de matériau d'emballage selon la revendication 2, dans lequel lesdites couches sont collées ensemble par laminage, thermocollage, collage ou par extrusion de ladite couche non tissée sur ladite couche tissée.

4. Ruban de matériau d'emballage selon la revendication 2, dans lequel ladite surface inférieure (24) comprend une couche de collage (22) appliquée à ladite couche tissée (12).

5. Ruban de matériau d'emballage selon la revendication 1, dans lequel ladite surface supérieure (20) a subi un traitement corona.

6. Ruban de matériau d'emballage selon la revendication 2, dans lequel ladite couche tissée (12) a une surface (16) ayant subi un traitement corona.

7. Ruban de matériau d'emballage selon la revendication 4, dans lequel ladite couche tissée (12) est traitée pour favoriser l'adhérence à ladite couche de collage.

8. Ruban de matériau d'emballage selon la revendication 4, dans lequel ladite couche de collage (22) est adaptée pour adhérer de façon détachable au dit objet.

9. Ruban de matériau d'emballage selon l'une quelconque des revendications de 1 à 8, dans lequel ledit ruban inclut des inhibiteurs de corrosion.

10. Ruban de matériau d'emballage selon la revendication 2, dans lequel ladite couche tissée (12) comprend des bandes adhésives de polyoléfine, de fibre de verre ou de polyester.

11. Ruban de matériau d'emballage selon la revendication 2, dans lequel ladite couche tissée (12) comprend des bandes adhésives élastiques étirables.

12. Ruban de matériau d'emballage selon la revendication 2, dans lequel ladite couche non tissée (14) comprend un film imperméable à l'eau de polyoléfine.

13. Ruban de matériau d'emballage selon la revendication 2, comprenant de plus une seconde couche non tissée (22) liée à ladite couche tissée.

14. Ruban de matériau d'emballage selon la revendication 2, dans lequel ladite couche non tissée (14) comprend un agent poisseux.

15. Ruban de matériau d'emballage selon la revendication 13, dans lequel lesdites couches non tissées (14, 22) sont collées à ladite couche tissée (12) par un liant permettant le déplacement desdites couches non tissées par rapport à ladite couche tissée.

16. Ruban de matériau d'emballage selon la revendication 15, dans lequel ledit liant est une couche de polyoléfine (17, 19).

17. Ruban de matériau d'emballage selon la revendication 1, dans lequel ladite bande comprend une couche adhésive.

18. Ruban de matériau d'emballage selon la revendication 1, dans lequel ladite bande comprend une couche d'agent poisseux cohésive ou polymérisée.
